# EUROPÄISCHE PATENTANMELDUNG

(11) **EP 1 098 115 A2**
(43) Veröffentlichungstag der Anmeldung: **09.05.2001**
(21) Anmeldenummer: 00122817.0
(22) Anmeldetag: 20.10.2000
(51) Int. Cl.: F16J 15/14

(54) **Hochtemperaturbeständiges Dichtband, sowie Verfahren zur Herstellung einer hochtemperaturbeständigen Dichtung**

(30) Priorität: 02.11.1999 DE 19952810; 29.12.1999 DE 19963697
(71) Anmelder: Josef Weber GmbH & Co. KG, Kunststofftechnik und Formenbau, 35683 Dillenburg (DE)
(72) Erfinder: Zipp, Thomas, Dr., 35683 Dillenburg (DE); Eckert, Rüdiger, 35767 Breitscheid-Erdbach (DE); Steiner, Joachim, 35708 Haiger-Flammersbach (DE)
(74) Vertreter: Müller, Eckhard, Dr.

(57) **Zusammenfassung**

Es wird eine Gußglieder-Heizkessel-Abdichtung in Form eines hochtemperaturbeständigen Dichtbandes bestehend aus polymeren und zugesetzten Füllstoffen beschrieben, wobei das Dichtband als plastische Dichtungsmasse auf der Dichtfläche eines Gußgliedes des Heizkessels aufgebracht ist und zur Abdichtung der Dichtflächen aufeinandergesetzter Gußglieder des Heizkessels dient. Die Dichtungsmasse wird unter der Einwirkung von hochfrequenten Wellen, insbesondere Mikrowellen, wenigstens partiell elastifiziert.

## Beschreibung

Die Erfindung betrifft eine Gußglieder-Heizkessel-Abdichtung in Form eines hochtemperaturbeständigen Dichtbandes bestehend aus polymeren und gegebenenfalls zugesetzten Füllstoffen, wobei das Dichtband als plastische Dichtungsmasse auf der Dichtfläche eines Gußgliedes des Heizkessels aufgebracht ist und zur Abdichtung der Dichtflächen aufeinandergesetzter Gußglieder des Heizkessels dient.

In vielen technischen Bereichen kommen plastische Dichtmassen zum Einsatz, wobei deren Dichtwirkung auf der Verformbarkeit der Dichtmasse beruht. Als Beispiel seien Gußglieder-Heizkessel genannt, bei denen der Feuerungsraum aus mehreren Gußgliedern beziehungsweise -segmenten gebildet wird. Um das Innere des Feuerungsraumes zum Außenraum abzudichten, sind zwischen den einzelnen Gußgliedern des Heizkessel Abdichtungen vorgesehen. Insbesondere sind Bestandteil dieser Abdichtungen die Dichtflächen der aufeinandergesetzten Gußglieder in Form einer Nut-/Feder-Konstruktion, wobei die plastische Dichtmasse in die Nut eines Gußgliedes eingebracht wird. Bei der anschließenden Montage der einzelnen Glieder zu einem Kessel taucht die auf der gegenüberliegenden Seite befindliche Feder in die mit Dichtungsmasse gefüllte Nut des benachbarten Gußsegments ein, so daß durch Zusammenwirken von Nut, Feder und Dichtungsmasse eine Dichtung gegen Rauchgas entsteht. Bei der hochtemperaturbeständigen Dichtmasse handelt es sich im allgemeinen um in wässriger Dispersion befindliche Polymere, denen gegebenenfalls Füllstoffe zugesetzt sind.

Bisher war es deshalb erforderlich, daß die plastische Dichtmasse zunächst für einen längeren Zeitraum, beispielsweise einigen Tagen, trocknen mußte, bis sich eine ausreichende Druckfestigkeit und Elastizität der Dichtungsmasse entwickelt hatte. Erst nach Ablauf dieser Trocknungsphase konnten die einzelnen Glieder zu einem Kessel montiert und anschließend verspannt werden. Aufgrund dieser langen Zeiträume des Trocknungsvorganges war eine kontinuierliche Fertigung und eine sofortige Dichtheitsprüfung derartiger Gußglieder-Heizkessel bisher nicht möglich.

Aus der DE 30 21 488 A1 ist es bereits bekannt, aus hochschmelzenden Olefinpolymeren bestehende Behälterverschlüsse mit einer Dichtung aus herkömmlichem PVC-Harz-Plastisol herzustellen. Das Vinyl-Harzplastisol, welches eine Geliertemperatur oberhalb der Schmelztemperatur des Behälterverschlusses hat, wird in den Behälterverschluß eingebracht und dann durch Mikrowellenenergie erhitzt, so daß auch der Behälterverschluß selbst aufgrund des Einflusses der Mikrowellenstrahlung auf eine Temperatur von 5° C bis 35° C unterhalb seines Schmelzpunktes erhitzt wird. Die Erhitzung des Vinylharzplastisols wird solange durchgeführt, bis das Plastisol vollständig geliert ist. Abschließend kühlt das Plastisol zur Ausbildung der Dichtung ab. Des weiteren ist es vorgesehen, den Behälterverschluß, dessen Material im wesentlichen für Mikrowellenstrahlung transparent ist, mittels herkömmlicher Maßnahmen vorzuerwärmen, so daß dem mittels Mikrowellenstrahlung auf Geliertemperatur zu erwärmenden Plastisol nicht zuviel Wärme durch den Behälterverschluß selbst entzogen wird.

Aus der US 4,996,779 ist eine Vorrichtung zum Trocknen von in Pellets oder Pulverform vorliegendem Kunststoffmaterial bekannt, wobei das Kunststoffmaterial mittels Mikrowellen bestrahlt wird. Während der Bestrahlung befindet sich das Kunststoffmaterial in einer rotierenden Trommel, wobei Mittel vorgesehen sind, die die mit Wasserdampf angereicherte Luft aus der Trommel absaugen.

Der Erfindung liegt die Aufgabe zugrunde, eine Gußglieder-Heizkessel-Abdichtung mit den eingangs genannten Merkmalen weiterzuentwickeln, so daß eine kontinuierliche Fertigung und direkt anschließende Qualitätskontrolle von Gußglieder-Heizkesseln ermöglicht ist. Diese Aufgabe wird nach der Erfindung bei der Gußglieder-Heizkessel-Abdichtung mit den eingangs genannten Merkmalen im wesentlichen dadurch gelöst, daß die plastische Dichtungsmasse unter der Einwirkung von hochfrequenten Wellen, insbesondere Mikrowellen, wenigstens partiell elastifiziert wird.

Durch diese Maßnahme kann der Wasseranteil der Dichtungsmasse innerhalb kurzer Zeit reduziert und gleichzeitig ein Vulkanisationsprozeß in der Dichtungsmasse ausgelöst werden. Dabei ändert sich durch die Bestrahlung mit hochfrequenten Wellen die Konsistenz und wichtige technologische Eigenschaften, insbesondere die Druckfestigkeit der Dichtungsmasse. Aus der zunächst plastischen Dichtungsmasse wir durch diese Maßnahmen eine elastische Dichtungsmasse mit einer höheren Druckfestigkeit bereitgestellt, die nach dem Aufeinandersetzen der Gußglieder und dem Verspannen der Gußglieder miteinander zu einem Kessel eine sofortige Qualitätsprüfung, insbesondere Dichtheitsprüfung des fertiggestellten Kessels ermöglichen. Durch diese Maßnahme können die Umlaufbestände in der Fertigung erheblich reduziert werden, da der Fertigungs- und Qualitätsprüfungsablauf nicht mehr durch die langwierige herkömmliche Trocknungsphase unterbrochen werden muß. Insgesamt ergibt sich durch die erfindungsgemäßen Maßnahmen eine sehr sichere und dauerhafte Abdichtung zwischen den einzelnen Gußgliedern des Heizkessels, die funktionell vergleichbar mit der Qualität der herkömmlichen Abdichtungen ist, jedoch die erwähnten fertigungstechnischen Vorteile, insbesondere im Hinblick auf eine kontinuierliche Fertigung und Qualitätsprüfung, besitzt.

Nach einer ersten vorteilhaften Ausgestaltung der Erfindung ist die plastische Dichtungsmasse eine Mischung aus synthetischem Latex, insbesondere ein Polymerlatex beziehungsweise eine wässrige Dispersion eines Styrol-Butadien-Copolymerisats und mineralischen Füllstoffen. Es hat sich gezeigt, daß derartige Dichtungsmassen insbesondere für die Abdichtung der Dichtflächen von Gußglieder-Heizkesseln geeignet sind und auch die erforderliche Temperaturbeständigkeit aufweisen.

Weiterhin bietet es sich nach einer anderen Ausführungsform der Erfindung an, daß die plastische Dichtungsmasse vor beziehungsweise bei dem Aufbringen auf das Gußglied im wesentlichen eine Strangform mit kreisförmigem Querschnitt besitzt. Derartige Dichtbänder sind bei der Verarbeitung der noch plastischen Dichtungsmasse einfach herzustellen und können direkt auf die Dichtfläche, vorzugsweise eine Dichtungsnut eines Gußgliedes gelegt werden.

Es besteht jedoch auch die Möglichkeit, daß die plastische Dichtungsmasse gemäß einer anderen vorteilhaften Ausgestaltung der Erfindung vor dem Auflegen auf das Gußglied als Hohlstrang oder dergleichen mit im wesentlichen Kreisringquerschriitt ausgebildet ist.

Eine andere Ausgestaltung der Erfindung sieht vor, daß die plastische Dichtungsmasse vor oder dem Auflegen auf das Gußglied im wesentlichen eine Strangform mit sternförmigem Querschnitt besitzt.

Sämtliche Querschnittprofile besitzen den Vorteil, daß die Dichtungsmasse nur kurzzeitig mit den hochfrequenten Wellen bestrahlt wird und die vorgegebene Form erhalten bleibt.

Von Vorteil sind die Dichtflächen benachbarter Gußglieder als Nut oder Feder ausgebildet, wobei die Dichtungsmasse wenigstens teilweise in der Nut aufgenommen ist und/oder wenigstens teilweise die Feder umfaßt.

Nach einer anderen vorteilhaften Weiterbildung der Erfindung tritt nach Aufeinandersetzen und Verpressen der Gußglieder der gegebenenfalls vorhandene plastische Anteil der Dichtungsmasse beziehungsweise des Dichtungsbandes aus dem Dichtflächenbereich aufeinandersitzender Gußglieder seitlich aus. Dabei kann sich der Anteil des noch im plastischen Zustand vorhandenen Dichtungsmaterials den Dichtflächen benachbarter Gußglieder des Heizkessels sehr gut anlegen, während der Anteil an elastischem Material für die erforderliche Druckfestigkeit und Elastizität der Abdichtung sorgt.

Ein erfindungsgemäßes Verfahren zum Herstellen eines Gußglieder-Heizkessels mit der beschriebenen Abdichtung kann beispielsweise darin bestehen, daß man die einzelnen Gußelemente auf ein Förderband legt, anschließend mittels einer Dosiervorrichtung die Dichtungsmasse als Strang auf eine Seite der Gußglieder aufbringt, die Gußglieder mit der aufgebrachten Dichtungsmasse weiter in eine Vorrichtung zur Erzeugung der hochfrequenten Strahlung, insbesondere der Mikrowellenstrahlung überführt, wobei beispielsweise für eine gleichmäßige Einwirkung der Strahlungsenergie das Gußglied in dieser Vorrichtung auf einem Drehteller angeordnet ist, anschließend die Gußglieder mittels einer Hebevorrichtung aufeinanderstapelt beziehungsweise aufeinandersetzt und zum Verpressen vorbereitet. Die Zykluszeiten dieses Arbeitsvorganges können im Minutenbereich, beispielsweise bei ca. einer halben Minute liegen, so daß eine kontinuierliche Fertigung der Gußglieder-Heizkessel mit sofortiger Qualitätsprüfung, insbesondere Dichtheitskontrolle des Kessels durch Abdrücken mit leichtem Überdruck ermöglicht ist.

Eine weitere Anwendungsmöglichkeit der Erfindung beziehungsweise ein erfindungsgemäßes Verfahren besteht darin, Dichtungsschnüre mit unterschiedlichsten Profilen aus der plastischen Dichtungsmasse herzustellen und diese anschließend mit hochfrequenten Wellen, insbesondere Mikrowellen zu bestrahlen. Nach der Bestrahlung mit Mikrowellen lassen sich die so behandelten Schnüre problemlos aufnehmen und weiterverarbeiten. Die technologischen Eigenschaften entsprechen denen der auf dem Gußglied aufgebrachten und dort elastifizierten Dichtungsmassenstränge.

## Patentansprüche

1. Gußglieder-Heizkessel-Abdichtung in Form einer hochtemperaturbeständigen Dichtungsmasse, insbesondere Dichtband, bestehend im wesentlichen aus Polymeren und gegebenenfalls zugesetzten mineralischen Füllstoffen, wobei die Dichtungsmasse auf der Dichtfläche insbesondere jeweils einer Seite eines Gußgliedes, vorzugsweise in einer Nut des Gußgliedes des Heizkessel aufgebracht ist und zur Abdichtung der Dichtflächen aufeinandergesetzter Gußglieder des Heizkessels dient, dadurch gekennzeichnet, daß die auf der Dichtfläche aufgebrachte, plastische Dichtungsmasse, insbesondere ein Dichtungsmassenstrang, unter der Einwirkung von hochfrequenten Wellen, insbesondere Mikrowellen wenigstens partiell elastifiziert wird.

2. Abdichtung nach Anspruch 1, dadurch gekennzeichnet, daß der Querschnitt des Dichtungsstranges partiell elastifiziert wird und der Restquerschnitt plastisch bleibt.

3. Abdichtung nach Anspruch 1 oder 2, dadurch gekennzeichnet, daß die plastische Dichtungsmasse eine Mischung aus synthetischem Latex, insbesondere Polymerlatex beziehungsweise eine wässrige Dispersion eines Styrol-Butadien-Copolymerisats, und mineralischen Füllstoffen ist.

4. Abdichtung nach einem der vorhergehenden Ansprüche, dadurch gekennzeichnet, daß die plastische Dichtungsmasse beim Aufbringen auf das Gußglied im wesentlichen eine Strangform mit kreisförmigem Querschnitt besitzt.

5. Abdichtung nach einem der Ansprüche 1 bis 4, dadurch gekennzeichnet, daß die plastische Dichtungsmasse beim Aufbringen auf das Gußglied im wesentlichen eine Hohlstrangform mit Kreisringquerschnitt besitzt.

6. Abdichtung nach einem der vorhergehenden Ansprüche 1 bis 4, dadurch gekennzeichnet, daß die plastische Dichtungsmasse beim Aufbringen auf das Gußglied im wesentlichen eine Strangform mit sternförmigem Querschnitt besitzt.

7. Abdichtung nach einem der vorhergehenden Ansprüche, dadurch gekennzeichnet, daß die Dichtflächen der Gußglieder als Nut oder Feder ausgebildet sind und die Dichtungsmasse wenigstens teilweise in der Nut aufgenommen ist und/oder die Feder zumindest teilweise umfaßt.

8. Abdichtung nach einem der vorhergehenden Ansprüche, dadurch gekennzeichnet, daß die hochfrequenten Wellen über eine kurze Zeit auf die vorzugsweise in einer Nut befindliche Dichtungsmasse einwirken.

9. Verfahren zur Herstellung einer hochtemperaturbeständigen Dichtung bestehend im wesentlichen aus Polymeren und gegebenenfalls zugesetzten mineralischen Füllstoffen, insbesondere Gußglieder-Heizkessel-Abdichtung nach einem der vorhergehenden Ansprüche, dadurch gekennzeichnet, daß die plastische Dichtungsmasse unter Einwirkung von hochfrequenten Wellen, insbesondere Mikrowellen, wenigstens partiell elastifiziert wird.

10. Verfahren nach Anspruch 9, dadurch gekennzeichnet, daß man die Dichtungsmasse auf die Dichtfläche aufbringt und anschließend mit hochfrequenten Wellen bestrahlt.

11. Verfahren nach Anspruch 9, dadurch gekennzeichnet, daß man die Dichtungsmasse zu Dichtungsschnüren oder -strängen formt, anschließend mit hochfrequenten Wellen bestrahlt und dann auf der Dichtfläche aufbringt.
